# EUROPÄISCHE PATENTSCHRIFT

(11) **EP 1 495 535 B1**
(45) Veröffentlichungstag und Bekanntmachung des Hinweises auf die Patenterteilung: **25.06.2008**
(21) Anmeldenummer: 03714878.0
(22) Anmeldetag: 26.03.2003
(51) Int. Cl.: H02P 6/16

(54) **VERFAHREN ZUR BESTIMMUNG DER ROTORLAGE EINES SYNCHRONMOTORS**
METHOD FOR DETERMINING THE ROTOR POSITION OF A SYNCHRONOUS MOTOR
PROCEDE DE DETERMINATION DE LA POSITION DU ROTOR D'UN MOTEUR SYNCHRONE

(30) Priorität: 08.04.2002 DE 10215428
(43) Veröffentlichungstag der Anmeldung: 12.01.2005
(73) Patentinhaber: Dr. Johannes Heidenhain GmbH, 83292 Traunreut (DE)
(72) Erfinder: KRANITZKY, Walter, 83278 Traunstein (DE); QUENTEL, Gerhard, 99846 Seebach (DE)
(86) Internationale Anmeldenummer: PCT/EP2003/003107
(87) Internationale Veröffentlichungsnummer: WO 2003/085817

(56) Entgegenhaltungen:
- EP-A- 1 085 650

## Beschreibung

Die Erfindung betrifft ein Verfahren zur Bestimmung der Rotorlage eines Synchronmotors. Ein solches Verfahren kann z.B. notwendig sein, um einen Synchronmotor zu starten, der von einem Positionsmeßgerät überwacht wird, das erst nach dem Überfahren einer Referenzposition eindeutige Kommutierungssignale liefert.

Im Stand der Technik sind zahlreiche Verfahren bekannt, mit denen die Lage des Rotors eines Synchronmotors bestimmt werden kann, um die elektrische Kommutierung des Motors auch ohne Positionsinformation von einem Positionsmeßgerät zu ermöglichen. Viele dieser Verfahren beruhen auf aufwendigen Messungen der Induktivitäten der Primärkreisspulen, oder auf der Messung und Auswertung der elektromotorischen Gegenkraft. Solche Verfahren erlauben es, einen Synchronmotor ganz ohne Positionsmeßgerät zu betreiben.

Will man lediglich zum Anfahren oder bei der Inbetriebnahme des Synchronmotors die Rotorlage bestimmen, etwa um einen Offset zwischen Positionsmeßgerät und Rotor zu bestimmen oder um den Motor zu einem Referenzpunkt zu fahren, so genügen einfachere Verfahren zur Bestimmung der Rotorlage. Von Bedeutung für den Betrieb eines Synchronmotors ist eigentlich die Lage des Vektors des magnetischen Moments des Rotors, vereinfachend sei aber im Folgenden von der Lage des Rotors gesprochen.

Die EP 1085650 A2 beschreibt ein Verfahren, nach dem zunächst eine erste Motorphase bestromt wird. Anhand der resultierenden Bewegungsrichtung des Rotors kann die Rotorlage auf einen Winkelbereich von 180° elektrisch festgelegt werden. Bestromt man dann eine zweite Phase, die mittig in diesem Bereich liegt, läßt sich anhand der resultierenden Drehrichtung des Rotors die Rotorlage auf einen Winkelbereich von 90° elektrisch festlegen. Mit jedem weiteren Schritt halbiert sich dieser Bereich, so daß das Verfahren abgebrochen werden kann, wenn die gewünschte Genauigkeit erreicht wurde. Nachteilig an diesem Verfahren ist jedoch, daß relativ große Bewegungen des Rotors bewirkt werden müssen, bevor anhand eines Positionsmeßgerätes eindeutig die resultierende Drehrichtung erkannt werden kann. Wählt man diese Bewegungen zu klein, so können Nutungskräfte und Maschinenvibrationen zu einem falschen Ergebnis führen, die Rotorlage wird dann nicht mehr richtig erkannt. Größere Bewegungen sind aber problematisch und nicht in allen Fällen erlaubt, etwa wenn ein Synchronmotor ein Werkzeug antreibt, das sich bereits im Eingriff mit einem Werkstück befindet. Ein weiterer Nachteil dieses Verfahrens besteht darin, daß der zur Erzeugung einer Bewegung des Rotors nötige Strom immer größer wird, je enger der Winkelbereich wird. Steht das vom Stromvektor erzeugte magnetische Feld nämlich bereits nahezu parallel zum Rotor, so wird das erzeugte Drehmoment bei konstantem Strom immer kleiner. Die Genauigkeit des Verfahrens ist also durch den maximal möglichen Strom begrenzt.

Der Aufsatz "A procedure to estimate the absolute position of the rotor flux of a permanent magnet synchronous machine" (EPE Florenz 1991, Backhaus et al.) beschreibt das Anlegen von Stromvektoren variablen Betrags und variabler Phase. Als Kriterium für das Erfassen eines Strombetrages gilt das Losreißen des Rotors. Der so beschleunigte Motor muß anschließend wieder in seine Ausgangslage gedreht werden. Manche Applikationen erlauben jedoch ein solches Losreißen nicht.

Aufgabe der Erfindung ist es, ein einfaches Verfahren anzugeben, mit dem die Rotorlage eines Synchronmotors bestimmt werden kann.

Diese Aufgabe wird gelöst durch ein Verfahren nach Anspruch 1. Vorteilhafte Details des Verfahrens ergeben sich aus den von Anspruch 1 abhängigen Ansprüchen.

In den meisten Fällen ist es ratsam, zunächst den Rotor des Synchronmotors mittels einer Bremse zu blockieren. Eine solche Bremse steht in vielen Applikationen bereits zur Verfügung, etwa in Werkzeugmaschinen, wo aus Sicherheitsgründen elektrische und mechanische Motorbremsen für alle Achsen üblich sind. Die Haltekraft einer solchen Bremse ist groß im Vergleich zu Nutungskräften des Synchronmotors oder durch Maschinenvibrationen auf den Rotor eingeprägte Kräfte. Diese Effekte sind daher für die folgende Bestimmung der Rotorlage bedeutungslos, es kann also mit sehr kleinen Auslenkungen des Rotors gearbeitet werden, die auch in kritischen Applikationen noch erlaubt sind. Wenn der Synchronmotor auch ohne Bremse durch eine hohe Haftreibung gehalten wird, kann das Einlegen einer Bremse entbehrlich sein, da die Haftreibung letztlich wie eine eingelegte Bremse wirkt.

Um den Rotor eines Synchronmotors zu bewegen, muß in den Spulen des Synchronmotors ein Strom erzeugt werden, der einen magnetischen Feldvektor erzeugt. Das magnetische Feld sorgt für ein Drehmoment am Rotor, falls der Rotor nicht magnetisch parallel (stabiles Gleichgewicht) oder antiparallel (labiles Gleichgewicht) zum Feldvektor steht. Wenn im Folgenden von einem Stromvektor die Rede ist, dann hat dieser den Betrag des eingeprägten Stromes und die Richtung des durch den Strom erzeugten magnetischen Feldes. Alle auf den Rotor des Synchronmotors bezogenen Winkelangaben beziehen sich im Folgenden auf eine elektrische Periode, d.h. eine volle Umdrehung des Stromvektors. In einem Synchronmotor kann eine volle Umdrehung der Motorwelle durchaus mehreren elektrischen Perioden entsprechen.

Legt man nun bei eingelegter Bremse eine Vielzahl von Stromvektoren mit unterschiedlicher Winkellage an den Synchronmotor an, und bestimmt für jeden dieser Stromvektoren den Betrag, der nötig ist, um eine kleine definierte Auslenkung des Rotors gegen die Haltekraft der Bremse zu erzielen, so ergibt sich ein Kurvenverlauf mit zwei Minima, die um jeweils 90° versetzt vor und nach dem gesuchten Winkel der Rotorlage liegen. Bereits mit der Bestimmung eines Minimums des zum Erzielen einer definierten Auslenkung nötigen Stromes ist also die Rotorlage festgelegt und der Motor kann kontrolliert gestartet werden, wenn man zusätzlich die Richtung der Auslenkung in diesem Minimum beachtet. Dies liegt daran, daß ein maximales Drehmoment bei konstantem Strom dann erreicht wird, wenn Rotor und Stromvektor aufeinander senkrecht stehen. Eine geforderte definierte Auslenkung wird hier mit einem minimalen Strom erzielt. Umgekehrt ist das erzeugte Drehmoment bei gegebenem Strom sehr klein, wenn der Stromvektor und der Rotor nahezu parallel oder antiparallel stehen. Zur Erzielung einer definierten Auslenkung wird also ein entsprechend hoher Strom notwendig sein. Die Erfindung beruht aber gerade darauf, die Position des Rotors aus den Winkelstellungen mit minimalem Betrag der Stromvektoren zu bestimmen, die Messung des Betrages des zur Erzielung einer definierten Auslenkung notwendigen Stromvektors kann also abgebrochen werden, wenn der Strom einen Grenzwert erreicht, ohne daß die Genauigkeit der Rotorlagebestimmung darunter leidet.

Zum Auslenken eines von einer Bremse gehaltenen Motors ist in erster Näherung eine der Auslenkung proportionale Kraft notwendig. Dies ist beispielsweise auf die Elastizität der Welle zurück zu führen, an der der Rotor und die Bremse angreifen. Aber auch die Haltekraft der Bremse selbst kann für sehr kleine Auslenkungen als Federkraft gesehen werden. Es ergibt sich eine zur Auslenkung des Rotors proportionale Rückstellkraft bzw. ein zur Auslenkung proportionales Rückstellmoment. Mißt man den Betrag des zur Erzielung einer definierten Auslenkung notwendigen Stromvektors, so entspricht diese definierte Auslenkung gerade einem definierten Drehmoment. Anstelle eines Positionsmeßgerätes zur Messung der Auslenkung des Rotors könnte das Verfahren also auch mit einem Drehmomentsensor durchgeführt werden, mit dem sich Betrag und Richtung des Drehmoments des Synchronmotors feststellen lassen. Nach dem Abschalten des Stromvektors kehrt der Rotor durch das Rückstellmoment in seine Ausgangslage zurück.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: ein Blockschaltbild einer Antriebseinheit mit Synchronmotor,
- Figur 2: ein Zeigerdiagramm mit Stromvektor und Rotorstellung,
- Figur 3: den winkelabhängigen Verlauf des zum Erzielen einer kleinen Auslenkung des Rotors nötigen Betrags des Stromvektors.

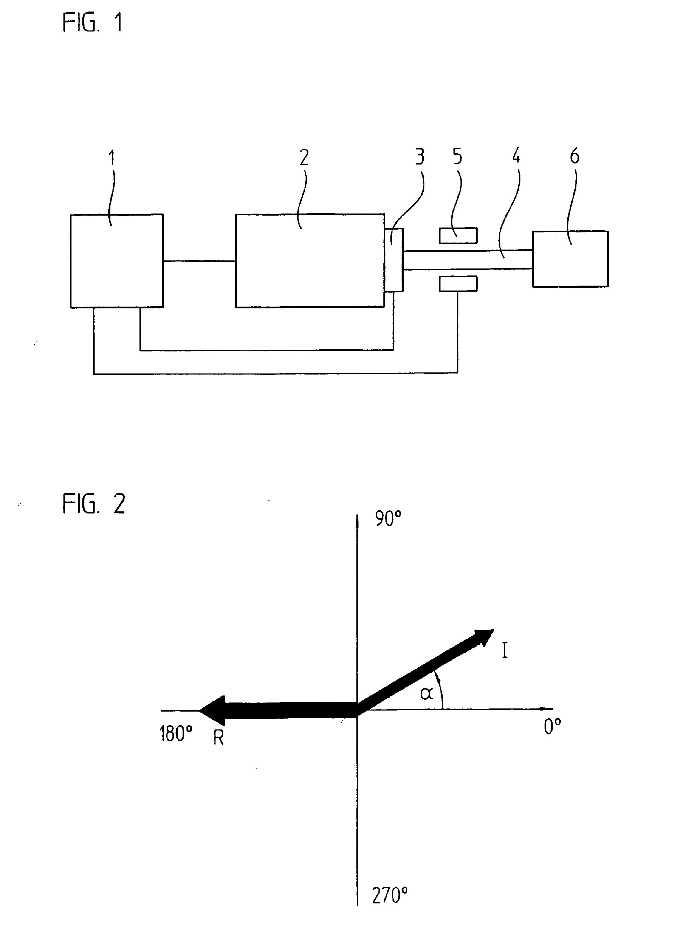

Figur 1 zeigt eine Antriebseinheit mit einem Synchronmotor 2, der über eine Steuerung 1 angesteuert wird. Die Rotorlage des Synchronmotors 2 wird über ein Positionsmeßgerät 3 überwacht, das beispielsweise ein inkrementaler Drehgeber sein kann, der erst nach dem Überfahren eines Referenzpunktes die Berechnung absoluter Positionswerte erlaubt. Das Positionsmeßgerät 3 ist mit der Welle 4 des Synchronmotors 2 verbunden. Da die Welle 4 starr mit dem Rotor des Synchronmotors 2 verbunden ist, kann aus der Lage der Welle 4 auf die Lage des Rotors geschlossen werden. Auf die Welle 4 kann bei Bedarf eine Bremse 5 einwirken. Solche mechanischen oder elektrischen Bremsen 5 dienen üblicherweise dazu, Bewegungsvorgänge im Notfall schnell abzubremsen oder hängende Achsen im stromlosen Zustand zu halten. Die Bremse 5 kann über die Steuerung 1 aktiviert werden. Über die Welle 4 wird eine Nutzlast 6 angetrieben. Dies kann etwa die Werkzeugspindel einer Werkzeugmaschine sein oder auch eine lineare Achse der Werkzeugmaschine, die über eine Spindel angetrieben wird.

In Figur 2 ist ein Vektordiagramm dargestellt, in dem der Rotor R (bzw. der Vektor des magnetischen Moments des Rotors R) ohne Beschränkung der Allgemeinheit bei 180° innerhalb einer elektrischen Periode des Synchronmotors steht. Im beschriebenen Ausführungsbeispiel wird nun ein Stromvektor I in Schritten von fünf Grad vom Winkel α = 0° bis α = 355° rotiert. Für jede Winkelstellung wird dabei der Betrag des Stromvektors I festgestellt, der nötig ist, um eine definierte Auslenkung des Rotors R zu erzielen. Es wird außerdem festgehalten, in welche Richtung die Auslenkung erfolgt. Diese Information kann vom Positionsmeßgerät 3 abgefragt werden, ebenso wie der Betrag der aktuellen Auslenkung.

Im in Figur 2 dargestellten Fall wird der Rotor R im Urzeigersinn, also in mathematisch negativer Richtung ausgelenkt. Dies gilt für alle Stromvektoren I im Winkelbereich 0° < α < 180°. Im Bereich 180° < α < 360° wird der Rotor R gegen den Urzeigersinn, also in mathematisch positiver Richtung ausgelenkt.

Als definierte Auslenkung genügen wenige tausendstel Grad. Eine so geringe Auslenkung von weniger als 0.01° wird kaum eine sicherheitsrelevante Bedeutung haben, und kann sogar verwendet werden, wenn durch diese Auslenkung ein Werkzeug bewegt wird, das sich im Eingriff mit einem Werkstück befindet.

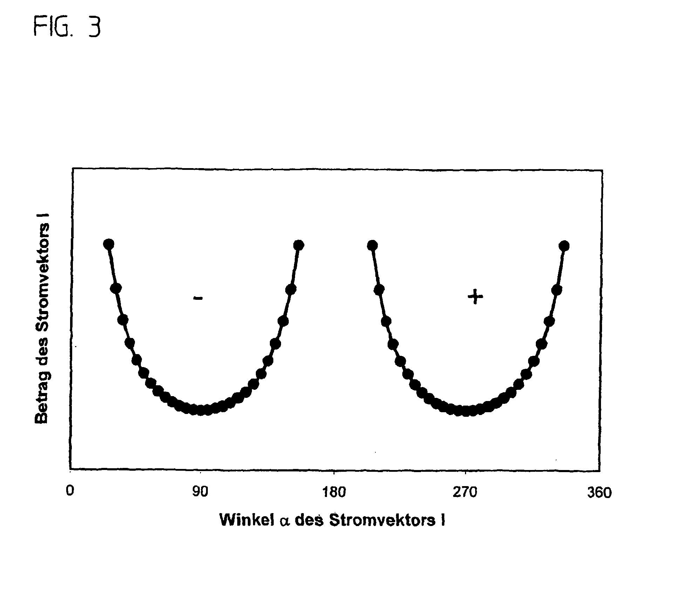

Trägt man den zum Erzielen einer definierten Auslenkung des Rotors R nötigen Betrag des Stromvektors I gegen die Winkelstellung des Stromvektors I auf, so erhält man den in Figur 3 dargestellten Kurvenverlauf. Da das resultierende Drehmoment vom Sinus des Winkels zwischen Stromvektor I und Rotor R abhängt und die Auslenkung des Rotors R proportional zum Drehmoment ist, erhält man einen Kurvenverlauf, der proportional zum Betrag des Kehrwertes des Sinus des Winkels zwischen dem Stromvektor I und dem Rotor R ist. Diese Funktion hat zwei Minima, die um 90° versetzt vor und nach dem gesuchten Winkel des Rotors R liegen. In Figur 3 ist zudem mit "-" und "+" die weiter oben beschrieben Richtung der Auslenkung des Rotors R angegeben.

Zur Bestimmung der Rotorlage wird die Lage der Minima ermittelt. Bereits mit der Kenntnis der Lage eines der Minima und der Richtung der Auslenkung kennt man die Lage des Rotors R und kann den Synchronmotor 2 kontrolliert starten.

Um die Genauigkeit zu erhöhen wird unter Berücksichtung der Richtung der Auslenkung der Mittelwert vom Winkel eines Minimums mit negativer Drehrichtung und des darauf folgenden (größeren) Winkels eines Minimums mit positiver Drehrichtung berechnet, indem man die Summe der beiden Winkel bildet und halbiert. Der resultierende Winkel entspricht der gesuchten Lage des Rotors R innerhalb einer elektrischen Periode. Beachtet man die Richtung der Auslenkung nicht, kann als Rotorlage ein um 180° gegen die tatsächliche Rotorlage verschobenes Resultat erhalten werden.

Anhand dieses Ergebnisses kann nun die Kommutierung des Synchronmotors 2 so vorgenommen werden, daß ein kontrolliertes Anfahren möglich ist. Es genügt hierzu, die Lage des Rotors R mit einer Genauigkeit von 10° innerhalb einer elektrischen Periode zu kennen. Erreicht das Positionsmeßgerät 3 eine Referenzposition, so kennt die Steuerung 1 die Lage des Rotors genau, die Kommutierung kann dann anhand der Positionsdaten des Positionsmeßgerätes 3 vorgenommen werden.

Wie in Figur 3 zu erkennen ist, sind in Bereichen, in denen der Rotor R und der Stromvektor I nahezu parallel oder antiparallel stehen, keine Beträge des Stromvektors I ermittelt. In diesen Bereichen ist zum Erzielen einer definierten Auslenkung ein besonders hoher Strom notwendig, da der Sinus des Winkels zwischen dem Stromvektor I und dem Rotor R sehr klein wird. Die Ermittlung des Betrages des Stromvektors I kann aber ab einem Grenzstrom abgebrochen werden, ohne die Genauigkeit der Bestimmung der Rotorlage zu verschlechtern, da zur Berechnung der Rotorlage lediglich die Bestimmung der Winkellage der Minima des Kurvenverlaufs nach Figur 3 wichtig ist. Hierzu genügt es, einige Werte im Bereich dieser Minima aufzunehmen. Der eingeprägte Strom kann also relativ klein bleiben.

Das beschriebene Verfahren eignet sich für rotatorische Synchronmotoren genauso wie für lineare Synchronmotoren. Die Vektordarstellung des Rotors R und des Stromvektors I in einer elektrischen Periode unterscheidet sich für Linearmotoren nicht von der des rotatorischen Synchronmotors. Die definierte Auslenkung ist beim Linearmotor eine lineare Auslenkung, die eine Rückstellkraft erzeugt. Diese Auslenkung kann beispielsweise im Bereich einiger µm, jedenfalls kleiner 0,1mm liegen, so daß das Verfahren wiederum auch in sicherheitstechnisch kritischen Applikationen anwendbar ist.

Vorteilhafterweise übernimmt die entsprechend eingerichtete Steuerung (1), etwa eine Numerische Steuerung einer Werkzeugmaschine, die Ablaufsteuerung für das hier beschrieben Verfahren.

## Patentansprüche

1. Verfahren zur Bestimmung der Rotorlage eines Synchronmotors (2), wobei der Motor durch hohe Haftreibung gehalten wird, bestehend aus folgenden Schritten:
- Anlegen einer Vielzahl von Stromvektoren (I) an den Synchronmotor (2) in unterschiedlichen Richtungen, dabei Feststellen des zum Erzielen einer definierten Auslenkung des Rotors (R) nötigen Betrags des Stromvektors (I), wobei sich durch die Auslenkung des Rotors (R) ein der Auslenkung proportionales Rückstellmoment ergibt, durch das der Rotor (R) nach dem Abschalten jedes Stromvektors (I) in seine Ausgangslage zurückkehrt,
- Berechnung der Rotorlage aus wenigstens einer Winkelposition des Stromvektors (I), bei der der zum Erzielen der definierten Auslenkung des Rotors (R) nötige Betrag des Stromvektors (I) minimal ist.

2. Verfahren nach Anspruch 1, wobei zur Messung der Auslenkung des Rotors (R) ein Positionsmeßgerät (3) verwendet wird.

3. Verfahren nach Anspruch 1 oder 2, wobei die definierte Auslenkung des Rotors (R) kleiner als 0,01 ° für rotatorische oder kleiner als 0,1 mm für lineare Synchronmotoren (2) ist.

4. Verfahren nach einem der vorhergehenden Ansprüche, wobei die Vielzahl von Stromvektoren (I) gleichmäßig über eine elektrische Periode verteilt werden.

5. Verfahren nach Anspruch 4, wobei die Vielzahl von Stromvektoren (I) in Schritten kleiner 10° verteilt werden.

6. Verfahren nach einem der vorhergehenden Ansprüche, wobei die Rotorlage berechnet wird als die Hälfte der Summe zweier nebeneinander liegender Winkelpositionen der Stromvektoren (I), bei denen der zum Erzielen der definierten Auslenkung des Rotors (R) nötige Betrag des Stromvektors (I) minimal ist.

7. Verfahren nach einem der vorhergehenden Ansprüche, wobei die Richtung der definierten Auslenkung des Rotors R so berücksichtigt wird, daß die Rotorlage eindeutig bestimmt wird.

8. Verfahren nach einem der vorhergehenden Ansprüche, wobei als erster Schritt eine den Rotor (R) des Synchronmotors (2) haltenden Bremse (5) eingelegt wird.

9. Steuerung für einen Synchronmotor (2), eingerichtet zum Ausführen eines Verfahrens nach einem der Ansprüche 1-8.

## Claims

1. Method for determining the rotor position of a synchronous motor (2), wherein the motor is held by high static friction, comprising the following steps:
• applying a plurality of current vectors (I) to the synchronous motor (2) in different directions, thereby determining the amount of the current vector (I) necessary to achieve a defined deflection of the rotor (R), wherein as a result of the deflection of the rotor (R) a restoring moment proportional to the deflection occurs, which causes the rotor (R) to return to its starting position after each current vector (I) is switched off,
• calculating the rotor position from at least one angular position of the current vector (I), at which the amount of the current vector (I) necessary for achieving the defined deflection of the rotor (R) is minimal.

2. Method according to claim 1, wherein a position measuring device (3) is used for measuring the deflection of the rotor (R).

3. Method according to claim 1 or 2, wherein the defined deflection of the rotor (R) is less than 0.01° for rotary synchronous motors (2) or less than 0.1 mm for linear synchronous motors (2).

4. Method according to one of the preceding claims, wherein the plurality of current vectors (I) are uniformly distributed over an electrical cycle.

5. Method according to claim 4, wherein the plurality of current vectors (I) are distributed in steps of less than 10°.

6. Method according to one of the preceding claims, wherein the rotor position is calculated as half the sum of two adjacent angular positions of the current vectors (I), at which the amount of the current vector (I) necessary for achieving the defined deflection of the rotor (R) is minimal.

7. Method according to one of the preceding claims, wherein the direction of the defined deflection of the rotor R is taken into consideration, such that the rotor position is determined unequivocally.

8. Method according to one of the preceding claims, wherein a brake (5) holding the rotor (R) of the synchronous motor (2) is engaged as a first step.

9. Control means for a synchronous motor (2) arranged to conduct a method according to one of claims 1-8.

## Revendications

1. Procédé de détermination de la position du rotor d'un moteur synchrone (2), le moteur étant bloqué par un frottement statique élevé, ledit procédé comprenant les étapes suivantes :
- application d'une pluralité de vecteurs de courant (I) au moteur synchrone (2) dans différentes directions, relevé de la valeur du vecteur de courant (I) requise pour obtenir une déviation définie du rotor (R), la déviation du rotor (R) engendrant un moment de rappel proportionnel à elle, lequel ramène le rotor (R) en position initiale après suppression de chaque vecteur de courant (I),
- calcul de la position du rotor à partir d'au moins une position angulaire du vecteur de courant (I) à laquelle la valeur du vecteur de courant (I) requise pour obtenir la déviation définie du rotor (R) est minimale.

2. Procédé selon la revendication 1, dans lequel un appareil de mesure de position (3) est utilisé pour mesurer la déviation du rotor (R).

3. Procédé selon la revendication 1 ou 2, dans lequel la déviation définie du rotor (R) est inférieure à 0,01° pour des moteurs synchrones (2) rotatifs ou inférieure à 0,1 mm pour les moteurs synchrones (2) linéaires.

4. Procédé selon une des revendications précédentes, dans lequel la pluralité de vecteurs de courant (I) est répartie uniformément sur une période électrique.

5. Procédé selon la revendication 4, dans lequel la pluralité de vecteurs de courant (I) est répartie par pas inférieurs à 10°.

6. Procédé selon une des revendications précédentes, dans lequel la position du rotor est calculée comme étant la moitié de la somme de deux positions angulaires voisines des vecteurs de courant (I) auxquelles la valeur du vecteur de courant (I) requise pour obtenir la déviation définie du rotor (R) est minimale.

7. Procédé selon une des revendications précédentes, dans lequel la direction de la déviation définie du rotor R est prise en compte de façon que la position du rotor soit déterminée de manière univoque.

8. Procédé selon une des revendications précédentes, dans lequel la première étape consiste à serrer un frein (5) qui bloque le rotor (R) du moteur synchrone (2).

9. Dispositif de commande pour un moteur synchrone (2), configuré pour mettre en oeuvre un procédé selon une des revendications 1 à 8.
